# EUROPÄISCHE PATENTANMELDUNG

(11) **EP 0 755 748 A2**
(43) Veröffentlichungstag der Anmeldung: **29.01.1997**
(21) Anmeldenummer: 96109736.7
(22) Anmeldetag: 18.06.1996
(51) Int. Cl.: B23P 19/04, B21D 39/20, B60R 21/26, B23P 19/02

(54) **Verfahren und Vorrichtung zur Anpressung von geklebten Folienstreifen**

(30) Priorität: 19.07.1995 DE 19526348
(71) Anmelder: Preh-Werke GmbH & Co. KG, 97616 Bad Neustadt (DE)
(72) Erfinder: Fick, Horst, 97640 Oberstreu (DE)
(74) Vertreter: Pfeiffer, Helmut, Dipl.-Ing.

(57) **Zusammenfassung**

Die Erfindung betrifft ein Verfahren und eine Vorrichtung zur Anpressung von geklebten Folienstreifen (5), die in Achsrichtung partiell auf die Innenwand eines Rohres (1) aufgebracht sind. Das bereits mit dem eingeklebten Folienstreifen (5) versehene Rohr (1) ist in einem Werkstückträger eingespannt. Durch einen zusätzlichen Arbeitsgang wird die Klebverbindung zeitweise über den gesamten Folienstreifen fortschreitend einer erhöhten spezifischen Flächenpressung ausgesetzt.

## Beschreibung

Die Erfindung betrifft ein Verfahren und eine Vorrichtung zur Anpressung von geklebten Folienstreifen, die in Achsrichtung partiell auf die Innenwand eines Rohres aufgebracht sind, wobei das Rohr fest in einem Werkstückträger eingespannt ist und die Vorrichtung aus einem in das Rohr verfahrbaren und aus diesem herausziehbaren Spreizdorn besteht.

Derartige Rohre sind Bestandteil von Gasgeneratoren für Prallsäcke zum Personenschutz in Kraftfahrzeugen. Hierbei werden Folienstreifen, zum Beispiel aus Aluminium, in dem Inneren des Rohres zur gasdichten Abdeckung einer Vielzahl von in der Rohrwandung befindlichen Bohrungen benutzt, die sich in zwei sich gegenüberliegenden in Richtung der Rohrachse erstreckenden Segmenten befinden.

Es ist bekannt, diese selbstklebenden Folienstreifen mittels eines als Spreizdorn ausgebildeten Zwischenträgers aufzunehmen, in das Rohr einzubringen und mittels Spreizung des Dorns an der vorgesehenen Stelle einzukleben.

Hierbei kann, bedingt durch die großflächig ausgebildete Pressung, gleichzeitig auf der ganzen Folienfläche und damit geringer spezifischer Kraft pro Flächeneinheit, die Klebverbindung manchmal Mängel aufweisen.

Der Erfindung liegt die Aufgabe zugrunde, ein Verfahren und eine Vorrichtung darzustellen, mit der diese Mängel vermieden werden und eine einwandfreie, blasenfreie und dauerhafte Klebverbindung sichergestellt wird.

Die Aufgabe der Erfindung wird durch die im Verfahrensanspruch angegebenen Schritte mittels einer im Vorrichtungsanspruch angegebenen baulichen Verkörperung gelöst, indem zeitweise, über den gesamten Folienquerschnitt fortschreitend die Klebverbindung einer erhöhten spezifischen Flächenpressung ausgesetzt wird.

Ein Ausführungsbeispiel der Erfindung ist in der Zeichnung schematisch dargestellt.

Es zeigen:
- **Fig. 1**: ein Rohr in perspektivischer Darstellung in einem Teilschnitt;
- **Fig. 2**: eine Montageanlage;
- **Fig. 3**: einen Schnitt A-A durch einen Zwischenträger;

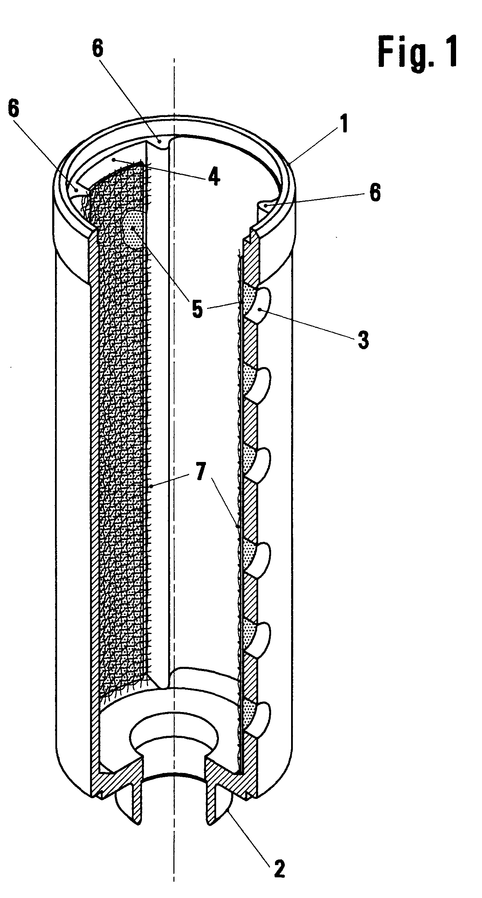

Das in Fig. 1 gezeigte Rohr 1 ist zum Beispiel aus Aluminium oder einer metallischen Legierung als Fließpreßteil hergestellt und dient als Gasgenerator für einen im Fahrzeugbau zur Personensicherheit verwendeten Prallsack. Im Bedarfsfall wird dieser durch Zündung einer pyrotechnischen Ladung am Kopf 2 des Rohres 1 aufgeblasen, wobei das erzeugte Gas das Rohr 1 durch eine Vielzahl von in der Rohrwandung befindlichen Bohrungen 3 austritt. Die Bohrungen 3 befinden sich in zwei sich gegenüberliegenden in Richtung der Rohrachse erstreckenden Segmenten 4. Um auszuschließen, daß im Laufe der Zeit Fahrzeuginsassen mit eventuell aus dem Treibsatz ausgasenden Substanzen in Berührung kommen, werden die Bohrungen 3 mit innerhalb des Rohres eingebrachten, zum Beispiel selbstklebenden vorzugsweise metallischen Folienstreifen 5 abgedeckt. Diese Folie wird durch den Explosionsdruck im Bereich der Bohrungen zerstört, so daß das erzeugte Gas austreten kann. Die Segmente 4 werden seitlich durch an die Rohrinnenwandung angeformte Rippen 6 begrenzt, die über die ganze Rohrlänge verlaufen. Zwischen jedem Rippenpaar 6 ist ein andeutungsweise dargestelltes metallisches Sieb 7 eingebracht, das die jeweiligen Folienstreifen 5 abdeckt. Dadurch wird verhindert, daß bei der Explosion der Treibladung feste Teilchen durch die Bohrungen 3 in den Prallsack gelangen.

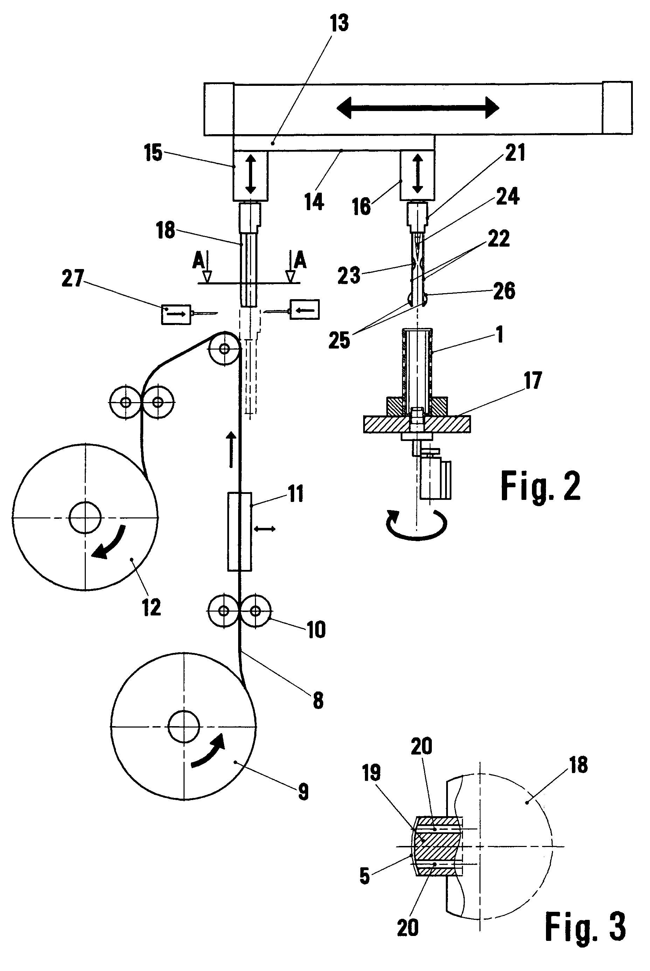

Nachstehend wird in Verbindung mit Figur 2 die Montageanlage zur Einbringung der Folienstreifen 5 in das Rohr 1 beschrieben. Die Folie ist ein metallisches, endloses Band 8, dessen eine Seite mit einer Klebstoffschicht versehen ist, die durch eine aus Kunststoff bestehende Bandfolie abgedeckt ist. Das Band 8 wird von einer Rolle 9 nach Bedarf abgewickelt und läuft durch ein Formrollenpaar 10, so daß das Band 8 eine Wölbung erhält, die dem Innendurchmesser des Rohres angepaßt ist und die Klebstoffschicht die konvexe Seite des Bandes ist. Das Band 8 durchläuft danach eine Formstation 11, die aus einer feststehenden und einer senkrecht zu dieser beweglichen Backe gebildet ist, wobei letztere jeweils bei Bandstillstand gegen die feststehende Backe gepreßt wird und die ins Band 8 eingebrachte Wölbung nachdrückt. An einer Umlenkrolle wird die die Klebstoffschicht des Bandes abdeckende Bandfolie von der metallischen Folie abgezogen und auf eine Rolle 12 gewickelt.

An einem Galgen 13 ist ein horizontal in zwei Stellungen verschiebbarer Schlitten 14 mit zwei Werkzeugköpfen 15, 16 angeordnet. Die Köpfe 15, 16 können jeweils über einen Werkstückträger 17 positioniert werden, in dem senkrecht das Rohr 1 eingespannt ist. Der Werkstückträger 17 ist so ausgebildet, daß das Rohr 1 um seine senkrechte Achse um 180° gedreht werden kann. Die Werkzeugköpfe tragen einen als Spreizdorn ausgebildeten Zwischenträger 18 und einen Anpreßspreizdorn 19.
Die Werkzeuge sind durch ihre Köpfe jeweils senkrecht verschiebbar und gelangen so in ihre jeweilige Arbeitsposition.

Zur Übernahme eines der Länge der Rohres 1 entsprechenden Folienstreifens 5 wird der Zwischenträger 18 in die gestrichelt gezeichnete Position senkrecht verschoben. Die Außenkontur des Zwischenträgers 18 weist in dem mit dem Folienstreifen 5 in Anlagekontakt bringbaren Bereich eine der Wölbung des Folienstreifens 5 entsprechende Kontur auf. Der Zwischenträger ist als Spreizdorn ausgebildet. Das aus dem Umfang achsparallel ausspreizende Segment 19 bildet die Aufnahme für den Folienstreifen 5. An der Oberfläche kann das Segment 19 eine glatte Schicht aus Gummi oder Kunststoff aufweisen. Durch eine Vielzahl von Bohrungen 20 im Segment 19 wird der Folienstreifen 5 mittels Unterdruck an das Segment gesaugt. Entsprechend dem Arbeitstakt fährt der Zwischenträger aus der gestrichelt dargestellten Übernahmeposition in die mit Vollstrich dargestellte Ausgangsposition zurück und mittels einer Trenneinrichtung 27 wird der Folienstreifen 5 vom Band 8 abgetrennt. Die Bandabwicklung wird gestoppt und der Zwischenträger 18 wird mittels des Schlittens 14 horizontal in eine Position oberhalb des in den Werkstückträger 17 eingespannten Rohres 1 verschoben, wobei sich diese Position in einer fiktiven Verlängerung der Rohrachse befindet und Rohr 1 und Zwischenträger 18 einander so zugeordnet sind, daß sich der auf dem Zwischenträger befindliche metallische Folienstreifen in der fiktiven Verlängerung eines der die Bohrungen 3 aufweisenden Segmentes 4 des Rohres 1 befinden.

Danach fährt der als Spreizdorn ausgebildete Zwischenträger 18 in das Rohr 1 um ein vorgegebenes Maß und das Segment 19 wird rechtwinklig um ein vorgegebenes Maß parallel zur Rohrachse ausgefahren, so daß der metallische Folienstreifen 5 mittels der Klebstoffschicht mit der Rohrinnenwand in Kontakt gebracht und verklebt wird.

Nach Abschaltung des Unterdruckes und Rückstellung des ausgefahrenen Segmentes 19 wird der Zwischenträger 18 aus dem Rohr 1 gefahren und der Schlitten 14 stellt ihn in die Aufnahmeposition zurück. Der Werkstückträger 17 schaltet um 180° und durch Wiederholung des beschriebenen Ablaufs wird ein zweiter Folienstreifen 5 in das Rohr eingebracht. Der Werkzeugkopf 16 weist einen Anpreßspreizdorn 21 auf. Dieser hat zwei sich gegenüberliegende Schenkel 22, deren einen Enden in dem Werkzeugkopf 16 eingespannt sind und der Abstand der freien Enden zueinander mittels eines zwischen auf der Innenseite der Schenkel 22 befindlichen Nocken 23 einfahrbaren Dorn 24 veränderlich ist. Die freien Enden tragen dem Innendurchmesser des Rohres angepaßte Endstücke 25 in einer Breite, die dem lichten Abstand eines Rippenpaares 6 entspricht. Der Anpreßspreizdorn 21 wird so in das Rohr eingefahren, daß sich die Endstücke 25 in der Bahn der Folienstreifen 5 befinden. Die Schenke 22 werden durch den Dorn 24 scherenförmig gespreizt und in gespreiztem Zustand ausgezogen, wodurch mittels der Endstücke 25 die metallischen Folien 5 praktisch in einem Walkvorgang fortschreitend an die Innenwandung des Rohres gepreßt werden und damit eine blasenfreie Klebverbindung sichergestellt wird. Hierzu sind die Endstücke 25 entsprechend zweckmäßig geometrisch geformt und weisen zum Beispiel eine durch eine Abrundung gebildete Anlauffläche 26 auf.

## Patentansprüche

1. Verfahren zur Anpressung von geklebten Folienstreifen, die in Achsrichtung partiell auf die Inenwand eines Rohres aufgebracht sind, wobei das Rohr fest in einem Werkstückträger eingespannt ist und ein in das Rohr einfahrbarer und aus diesem herausziehbarer Spreizdorn vorhanden ist,
**gekennzeichnet** durch folgende Schritte:
- Einfahren des Spreizdorns in das Rohr,
- scherenförmiges Spreizen von zwei Schenkeln des Spreizdorns derart, daß die freien Enden der Schenkel, die je ein Endstück zur Anlage am zugeordneten Folienstreifen aufweisen, an die Folienstreifen gepreßt werden,
- Herausziehen des Spreizdorns aus dem Rohr in gespreiztem Zustand unter walkender Anpressung der Folienstreifen an die Innenwandung des Rohres.

2. Spreizdorn zur Durchführung des Verfahrens nach Anspruch 1,
**dadurch gekennzeichnet,**
daß der Spreizdorn (21) aus zwei sich gegenüberliegenden in Längsrichtung erstreckenden Schenkeln (22) besteht, deren einen Enden in einem Werkzeugkopf (16) eingespannt sind und wobei der Abstand der freien Enden zueinander mittels eines zwischen auf der Innenseite der Schenkel (22) befindliche Nocken (23) einfahrbare Dorn (24) veränderlich ist, wobei die freien Enden dem Innendurchmesser des Rohres angepaßte Endstücke (25) aufweisen, deren Breite der eines der Folienstreifen entspricht.

3. Vorrichtung nach Anspruch 2,
**dadurch gekennzeichnet,**
daß die Endstücke (25) eine Anlauffläche (26) aufweisen.
